# EUROPEAN PATENT SPECIFICATION

(11) **EP 1 266 732 B1**
(45) Date of publication and mention of the grant of the patent: **14.11.2007**
(21) Application number: 02009110.4
(22) Date of filing: 24.04.2002
(51) Int. Cl.: B28B 3/22

(54) **Machine for the extrusion and wet-forming of clay**
Vorrichtung zum Strangpressen und Nassformen von Ton
Procédé d'extrusion et de formage humide d'argile

(30) Priority: 07.06.2001 IT TO20010550
(43) Date of publication of application: 18.12.2002
(73) Proprietor: Bongioanni Macchine S.p.A., 12045 Fossano (Cuneo) (IT)
(72) Inventor: Fissolo, Ferdinando, 12045 Fossano (Cuneo) (IT)
(74) Representative: Buzzi, Franco

(56) References cited:
- DE-A- 19 917 471
- DE-B- 1 796 005
- GB-A- 448 769
- GB-A- 624 017

## Description

The present invention relates in general to machines for the extrusion and wet-forming of clay, namely to the so-called "brick-making machines" for the formation of tiles or bricks.

More in particular, the invention regards a machine of the type mentioned above, comprising a bath in which there turn a horizontal auger or screw feeder and, above the auger, a pair of counter-rotating paddles set alongside one another, a first electric motor being provided for driving the auger and a pair of second electric motors being providing for driving each a respective paddle.

In the operation of said machines, the efficiency is affected and conditioned by various factors, among which the wear of the conveying and thrust propellers of the auger, the wear of the paddles and scrapers provided in the bath, the wear of the linings, and the wear of the extrusion die. In addition, also the clay introduced into the bath of the machine can affect efficiency of the latter, according to its composition, its characteristics of plasticity, and the coefficient of friction with the parts of the machine.

In order to maintain machine efficiency within a reasonable range, a normal approach is to adjust the speed of rotation of the auger manually at relatively high values, and any case values higher than the ones that would normally be necessary and sufficient. This entails high values of power used by the electric motor for operating the auger, with consequent energy waste. If account is taken of the large amount of power absorbed by the electric motor for driving the auger and of the fact that the machines in question are for the most part kept permanently in operation for periods of months or even years, the said excessive consumption results in enormous superfluous costs.

Added to the above is the fact that, as a result of the speed of the rotating parts, which is normally higher than the one actually necessary, the mechanical components and the parts subject to wear of the machine undergo early consumption.

The purpose of the present invention is to overcome the above-mentioned drawbacks, and more in particular to maintain the level of the clay inside the bath at optimal values with a speed of rotation of the auger that is reduced and as close as possible to the minimum threshold required for optimizing the efficiency of the machine both in terms of lower energy consumption and in terms of a reduced consumption of mechanical parts and components subject to wear.

According to the invention, the above purpose is achieved thanks to the fact that a machine for the extrusion and wet-forming of clay of the type defined at the beginning of the present description is essentially characterized in that it is equipped with an electronic control unit set for automatically regulating the speed of rotation imparted on the auger by the first electric motor according to the current absorption of said second electric motors.

In addition, the electronic control unit is designed to maintain the speed of rotation of the auger at the minimum r.p.m. necessary for ensuring an optimal level of substantially constant filling of the bath.

Furthermore, the electronic control unit is conveniently programmable according, for example, to the recipe and composition of the clay introduced into the bath, and is advantageously made up of an assembly that can be applied even to already existing machines.

Forming the subject of the present invention is also a method for controlling the machine for extrusion and wet-forming of clay.

In brief, the invention makes it possible, in any operating condition of the machine, to adjust the speed of the auger in such a way as to optimize energy consumption in a completely automatic way, without any need for any sort of intervention by the operator in charge of the machine.

The level of the clay inside the bath is thus maintained constant, and the speed of the propeller of the auger adapts to the variations in the amount of clay introduced, as well as to the variations in the wetness of the clay, and even to the pressure variations that may occur during extrusion through the extrusion die of the machine. The foregoing enables the following advantages to be achieved:
- the thrust exerted by the auger on the clay during extrusion of the latter is applied without any sharp variations, which results in a higher quality of the extruded end product (tiles or bricks);
- the energy consumption of the machine is optimized, with decidedly substantial savings; and
- some mechanical parts of the machine undergo a smaller amount of wear.

The invention will now be described in detail with reference to the attached drawings, which are provided purely by way of non-limiting example and in which:
- Figure **1** is a partial schematic view, namely a partial vertical cross-section, of a machine according to the invention; and
- Figure **2** is a cross-sectional view according to the line II-II of Figure 1.

The machine for the extrusion and wet-forming of clay, which is partially and schematically illustrated in the drawings, is of a type in general in itself known, in so far it has been for some time now produced and successfully marketed by the present applicant, for example under the trade name "MATTONIERA TECNO"; consequently, its general conformation will not be described in detail herein. It should, however, be emphasized that the idea at the basis of the present invention can be applied, not only to machines of the type described, but also to any machine for the extrusion and wet-forming of clay which has a similar or equivalent structure.

For the purposes of the present invention, it is sufficient to specify that the machine comprises a body defining a bath 1 with a bottom part 2 and a top part 3.

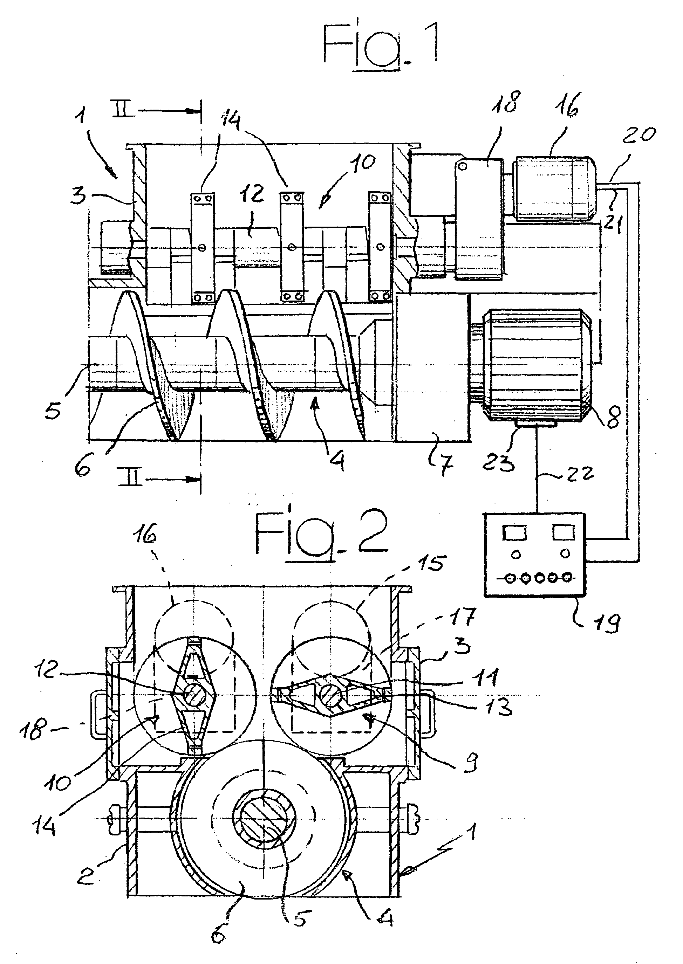

Set in the bottom part 2 of the bath 1 is an extrusion auger 4 comprising a horizontal shaft 5 carrying one or more propellers 6. The shaft 4 extends at the rear of the bath 1 and is driven in rotation, via a reducer 7, by a first high-power electric motor 8. In the representation of Figure 1, for reasons of simplicity the motor 8 is illustrated directly connected to the reducer 7; in actual fact, the motor 8 is more conveniently set in a remote position and drives the reducer 7 via a system of belts and pulleys.

The other end of the auger 4 (not illustrated in the drawings) extends inside a pipe which is set on the prolongation of the bath 1 and to which the extrusion mouth or die is applied.

The top part 3 of the bath 1, which is designed to be positioned underneath a vacuum box for gravity feed of the clay, contains a pair of counter-rotating paddles 9, 10 set alongside one another, which are in close proximity to the top area of the portion of auger 4 that is set in the bottom part 2 of the bath 1.

Each paddle 9, 10 includes a respective horizontal shaft 11, 12 which carries a plurality of angularly staggered arms 13, 14 having the particular chamfered shape that may be seen in Figure 1.

The shafts 11, 12 of the paddles 9, 10 protrude from the rear of the bath 1 and are each driven by a respective electric motor 15, 16 at a relatively low power, via a respective reducer 17, 18.

The arrangement of the paddles 9, 10 in the illustration, together with the conformation of the corresponding arms 13, 14, enables the latter to achieve, during machine operation, not only an action of stirring of the clay introduced into the top part 3 of the bath 1, but also an effective and useful action of thrust of the clay downwards, i.e., in the direction of the auger 4.

According to the fundamental characteristic of the invention, the machine is provided with a system for optimizing energy consumption of the motor 8 of the auger 4, by means of automatic regulation of the speed of rotation of said motor. For this purpose, the machine is equipped with an electronic control unit, designated as a whole by 19, which is connected in 20, 21 to appropriate sensors or transducers (not illustrated in the drawings in so far as they are within the reach of a person skilled in the branch), which are designed to detect current absorption both of the electric motor 15 and of the electric motor 16, respectively of the paddle 9 and of the paddle 10, and to send corresponding signals to the control unit 19. The unit 19 is moreover connected in 22 to a regulator 23 of a conventional type, which is designed to vary the speed of rotation of the shaft 5 of the auger 4 in response to the control signals sent by the control unit 19 itself. The said signals are processed, through a logic based on specific algorithms, according to the signals of current absorption (or rather, power absorption) of the two electric motors 15, 16 at input. In practice, on the basis of continuous control of the power absorption of the motors 15 and 16, the control unit 19 determines two pre-set thresholds, one of minimum amperage and one of maximum amperage, regulating accordingly, in an automatic way, the speed of rotation of the motor 8, and hence of the auger 4, at the lowest r.p.m. necessary and sufficient for ensuring a constant optimal level of filling of the bath 1 with clay.

It has been experimentally found that the optimal level of filling is the one basically corresponding to a horizontal plane passing through the axes of the shafts 11 and 12 of the two paddles 9 and 10. To said level of filling there corresponds a clearly determined absorption of the two motors 15 and 16, to which the electronic control unit 19 will cause to correspond a given optimal speed of rotation of the auger 4. This optimal speed of rotation will be automatically variable according to the wear and consumption of the parts of the machine (propellers 6, paddles 4, scrapers, linings, extrusion die, etc.), and of course will also depend upon the recipe, i.e., upon the composition of the type of clay introduced into the bath 1. Consequently, the electronic control unit 19 will be programmable according to the characteristics of the material, as well as according to possible further parameters selected.

It will thus be possible to maintain the speed of rotation of the auger 4 constantly at the optimal level, namely at the minimum level for the purposes of achieving the lowest power consumption by the motor 8 and the lowest consumption of the mechanical parts and parts subject to wear of the machine.

It should be noted that the control system consisting of the electronic control unit 19 with the corresponding sensors, the regulator and the electrical connections can be conveniently made as an assembly that can be easily applied even to already existing machines, without requiring any particular adaptation or modification of said machines.

Of course, the details of construction and the embodiments may vary widely with respect to what is described and illustrated herein purely by way of example, without thereby departing from the scope of the present invention as defined in the ensuing claims.

## Claims

1. A machine for the extrusion and wet-forming of clay, comprising a bath (1) in which there turn a horizontal auger (4) and, above said auger (4), a pair of counter-rotating paddles (9, 10) set alongside one another, a first electric motor (8) being provided for driving the auger (4) and a pair of second electric motors (15, 16) being provided for driving each a respective paddle (9, 10), the said machine being **characterized in that** it is equipped with an electronic control unit (19) set for automatic regulation of the speed of rotation imparted on the auger (4) by the first electric motor (8) according to the current absorption of said second electric motors (15, 16).

2. The machine according to Claim 1, **characterized in that** said electronic control unit (19) is designed to maintain the speed of rotation of the auger (4) at a minimum r.p.m. necessary for ensuring an optimal level of substantially constant filling of the bath (1).

3. The machine according to Claim 2, **characterized in that** said electronic control unit (19) is programmable.

4. A method for controlling a machine for the extrusion and wet-forming of clay comprising a bath (1) in which there turn a horizontal auger (4) and, above said auger (4), a pair of counter-rotating paddles (9, 10) set alongside one another, a first electric motor (8) being provided for driving the auger (4) and a pair of second electric motors (15, 16) being provided for driving each a respective paddle (9, 10), the said method being **characterized in that** it consists in automatic regulation, according to the current absorption of said second electric motors (15, 16), of the speed of rotation imparted on the auger (4) by said first electric motor (8).

5. The method according to Claim 4, **characterized in that** the speed of rotation of the auger (4) is substantially set and maintained at the minimum r.p.m. necessary for ensuring an optimal level of substantially constant filling of the bath (1).

6. The method according to Claim 5, **characterized in that** said optimal filling level substantially corresponds to the level of a plane passing through the axes of the shafts (11, 12) of said paddles (9, 10).

## Patentansprüche

1. Maschine zum Extrudieren und Nassformen von Ton, die ein Bad (1), in dem eine Windung einer horizontalen Förderschnecke (4) und über der Förderschnecke (4) ein Paar gegenläufiger Paddel (9, 10) vorhanden sind, die nebeneinander angeordnet sind, einen ersten Elektromotor (8), der zum Antreiben der Förderschnecke (4) vorhanden ist, und ein Paar zweiter Elektromotoren (15, 16), die zum Antreiben jeweils eines entsprechenden Paddels (9, 10) vorhanden sind, umfasst, wobei die Maschine **dadurch gekennzeichnet ist, dass** sie mit einer elektronischen Steuereinheit (19) ausgestattet ist, die zum automatischen Regulieren der Geschwindigkeit der Drehung, in die die Förderschnecke (4) durch den ersten Elektromotor (8) versetzt wird, gemäß dem Stromverbrauch der zweiten Elektromotoren (15, 16) eingestellt ist.

2. Maschine nach Anspruch 1, **dadurch gekennzeichnet, dass** die elektronische Steuereinheit (19) dazu dient, die Geschwindigkeit der Drehung der Förderschnecke (4) auf einer minimalen Drehzahl zu halten, die erforderlich ist, um eine optimale Höhe im Wesentlichen konstanter Füllung des Bades (1) zu gewährleisten.

3. Maschine nach Anspruch 2, **dadurch gekennzeichnet, dass** die elektronische Steuereinheit (19) programmiert werden kann.

4. Verfahren zum Steuern einer Maschine zum Extrudieren und Nassformen von Ton, die ein Bad (1), in dem eine Windung einer horizontalen Förderschnecke (4) und über der Förderschnecke (4) ein Paar gegenläufiger Paddel (9, 10) vorhanden sind, die nebeneinander angeordnet sind, einen ersten Elektromotor (8), der zum Antreiben der Förderschnecke (4) vorhanden ist, und ein Paar zweiter Elektromotoren (15, 16), die zum Antreiben jeweils eines entsprechenden Paddels (9, 10) vorhanden sind, umfasst, wobei das Verfahren **dadurch gekennzeichnet ist, dass** es in automatischer Regulierung der Geschwindigkeit der Drehung, in die die Förderschnecke (4) durch den ersten Elektromotor (8) versetzt wird, gemäß dem Stromverbrauch der zweiten Elektromotoren (15, 16) besteht.

5. Verfahren nach Anspruch 4, **dadurch gekennzeichnet, dass** die Geschwindigkeit der Drehung der Förderschnecke (4) im Wesentlichen auf die minimale Drehzahl, die erforderlich ist, um eine optimale Höhe im Wesentlichen konstanter Füllung des Bades (1) zu gewährleisten, eingestellt und darauf gehalten wird.

6. Verfahren nach Anspruch 5, **dadurch gekennzeichnet, dass** die optimale Füllhöhe im Wesentlichen der Höhe einer Ebene entspricht, die durch die Achsen der Wellen (11, 12) der Paddel (9, 10) hindurch verläuft.

## Revendications

1. Machine pour l'extrusion et le formage humide d'argile, comprenant un bain (1) dans lequel tournent une étireuse horizontale (4) et, au-dessus de ladite étireuse (4), une paire d'aubes à rotation inverse (9, 10) placées le long l'une de l'autre, un premier moteur électrique (8) étant prévu afin d'entraîner l'étireuse (4) et une paire de seconds moteurs électriques (15, 16) étant prévue afin d'entraîner chaque aube respective (9, 10), ladite machine étant **caractérisée en ce qu'**elle est équipée d'une unité de commande électronique (19) destinée à réguler automatiquement la vitesse de rotation transmise à l'étireuse (4) par le premier moteur électrique (8) selon l'absorption de courant desdits seconds moteurs électriques (15, 16).

2. Machine selon la revendication 1, **caractérisée en ce que** ladite unité de commande électronique (19) est conçue afin de maintenir la vitesse de rotation de l'étireuse (4) à un nombre de tr/min nécessaire afin de garantir un niveau optimal de remplissage sensiblement constant du bain (1).

3. Machine selon la revendication 2, **caractérisée en ce que** ladite unité de commande électronique (19) est programmable.

4. Procédé de commande d'une machine d'extrusion et de formage humide d'argile comprenant un bain (1) dans lequel tournent une étireuse horizontale (4) et, au-dessus de ladite étireuse (4), une paire d'aubes à rotation inverse (9, 10) placées le long l'une de l'autre, un premier moteur électrique (8) étant prévu afin d'entraîner l'étireuse (4) et une paire de seconds moteurs électriques (15, 16) étant prévue afin d'entraîner chaque aube respective (9, 10), ledit procédé étant **caractérisé en ce qu'**il consiste en la régulation automatique, selon l'absorption de courant desdits seconds moteurs électriques (15, 16), de la vitesse de rotation transmise à l'étireuse (4) par ledit premier moteur électrique (8).

5. Procédé selon la revendication 4, **caractérisé en ce que** la vitesse de rotation de l'étireuse (4) est sensiblement définie et maintenue au nombre de tr/min minimum nécessaire pour assurer un niveau optimal de remplissage sensiblement constant du bain (1).

6. Procédé selon la revendication 5, **caractérisé en ce que** ledit niveau de remplissage optimal correspond sensiblement au niveau d'un plan traversant les axes des arbres (11, 12) desdites aubes (9, 10).
